# FASCICULE DE BREVET EUROPEEN

(11) **EP 2 788 249 B1**
(45) Date de publication et mention de la délivrance du brevet: **29.03.2017**
(21) Numéro de dépôt: 12808748.3
(22) Date de dépôt: 10.12.2012
(51) Int. Cl.: B62K 7/02, B62J 1/16, B62J 17/08

(54) **VÉLO DE TRANSPORT D'ENFANT À STABILITÉ AUGMENTÉE**
FAHRRAD ZUR BEFÖRDERUNG EINES KINDES MIT ERHÖHTER STABILITÄT
BICYCLE FOR TRANSPORTING A CHILD WITH INCREASED STABILITY

(30) Priorité: 09.12.2011 BE 201100715
(43) Date de publication de la demande: 15.10.2014
(73) Titulaire: Richelle, Etienne, 1150 Bruxelles (BE)
(72) Inventeur: Richelle, Etienne, 1150 Bruxelles (BE)
(74) Mandataire: Colens, Alain M.G.M.
(86) Numéro de dépôt international: PCT/EP2012/074991
(87) Numéro de publication internationale: WO 2013/083849

(56) Documents cités:
- BR-U- MU8 402 701
- DE-A1-102010 005 916
- FR-A- 1 047 562
- FR-A1- 2 583 367
- US-A- 5 297 846
- US-A1- 2004 245 741

## Description

L'invention concerne un vélo équipé d'un siège arrière pour enfant.
Le document BRMU8402701U décrit un vélo présentant les caractéristiques du préambule de la revendication 1.
La manière la plus répandue pour transporter un enfant sur un vélo est d'installer un siège spécial généralement fixé sur le tube de selle ou sur le porte bagage. Dans ce type de configuration le centre de gravité de l'enfant se trouve longitudinalement au niveau de l'axe de roue arrière, voire légèrement derrière. Ceci induit un moment de cabrage.

Le siège est installé au dessus de la roue arrière, habituellement d'un diamètre de 26 pouces (660mm), et se trouve en hauteur, en créant ainsi au moindre déséquilibre un moment qui a tendance à coucher le vélo sur le côté.

La combinaison de ces deux moments rend le vélo difficile à conduire, et instable dès lors qu'il s'incline latéralement ou se cabre. Cette instabilité est particulièrement critique pour un adulte de petite taille lorsque ce dernier pousse le vélo, par exemple pour monter sur une bordure de trottoir avec l'enfant installé sur le vélo.

L'invention propose une solution permettant de supprimer le moment de cabrage et d'atténuer le moment ayant pour effet de coucher le vélo.

L'invention propose en effet une solution visant à améliorer la stabilité des vélos équipés de siège(s) de transport d'enfant, par recentrage et abaissement du centre de gravité de l'enfant grâce à une structure de cadre particulière, éventuellement ou de préférence en combinaison avec un choix de diamètres de roues réduits et/ou une augmentation de l'écartement des pédales.

L'invention sera plus facilement comprise à l'examen de la description qui suit en conjonction avec les dessins annexés dans lesquels :
la figure 1 est une vue schématique de côté, illustrant le moment de cabrage pour un vélo standard de l'art antérieur;
la figure 2 est une vue arrière illustrant le moment couchant pour un vélo standard de l'art antérieur;
la figure 3 est une vue de côté du vélo selon un mode de réalisation selon l'invention ;
la figure 4 est une vue arrière du vélo de la figure 3 ;
la figure 5 est une vue d'en haut haut d'un vélo de l'art antérieur, avec un pied de l'enfant et le pied correspondant de l'adulte dans le même plan longitudinal
la figure 6 est une vue d'en haut du vélo selon un mode de réalisation de l'invention avec une structure de cadre modifiée et pédalier élargi et montrant les pieds de l'enfant et ceux de l'adulte dans des plans longitudinaux différents;
la figure 7 illustre, vu d'en haut, quelques configurations possibles de haubans tubulaires arrière;
la figure 8 est une vue schématique en perspective d'un vélo avec un hauban tubulaire et des panneaux non porteurs
la figure 9 est une vue schématique en perspective d'un vélo avec une structure de panneaux porteurs;
la figure 10 est une vue schématique illustrant le basculement de la selle;
la figure 11 est une vue schématique illustrant le pivotement de la selle;
la figure 12 est une vue schématique illustrant la présence d'une capote de protection;
la figure 13 est une illustration générale vu de côté d'un vélo selon un mode de l'invention avec un utilisateur adulte et un enfant.

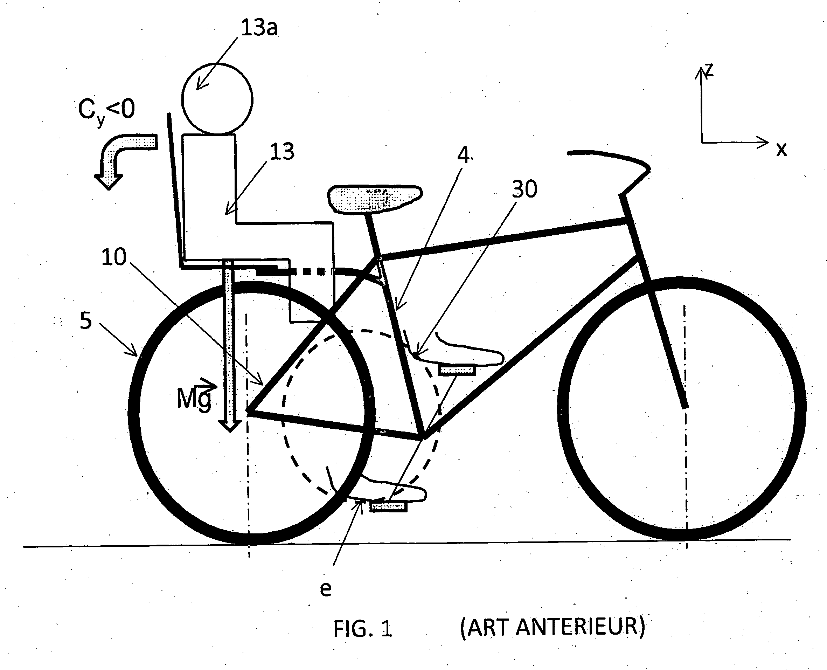

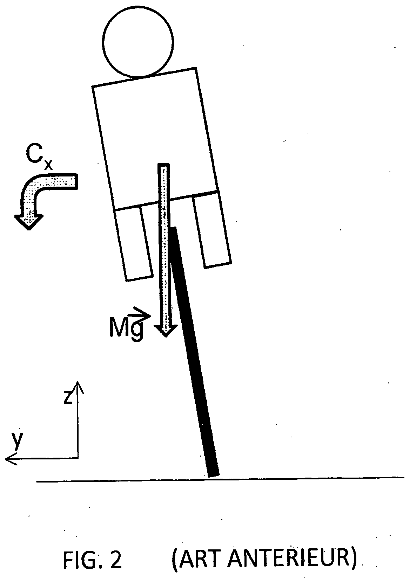

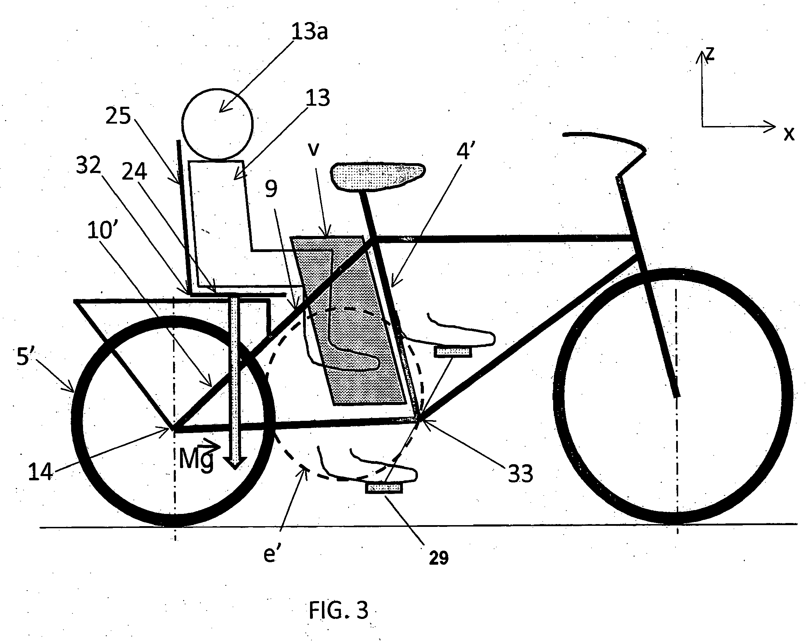

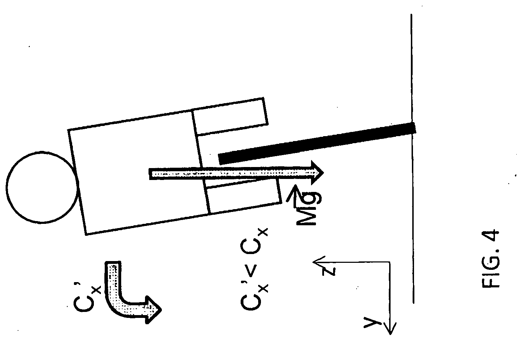

L'invention propose plus particulièrement de recentrer les masses en avançant le siège d'enfant à l'intérieur de l'empattement du vélo (comparez figures 1 et 3), et à abaisser le centre de gravité (Mg) de ce dernier en descendant l'assise du siège (comparez figures 2 et 4).

Il s'agit dès lors d'une résolution des deux problèmes présentés ci-dessus :
- le moment de cabrage C_{Y} disparait car le centre de gravité de l'enfant se trouve à l'intérieur de l'empattement, entre les points de contacts des roues avant et arrière et le sol,
- le moment couchant C_{X} est diminué par l'abaissement du centre de gravité de l'enfant.

L'adoption d'une roue arrière de plus petit diamètre (par exemple 20 pouces : 500 mm) permet d'abaisser le siège. Elle permet aussi de reculer l'axe de roue en minimisant l'augmentation de la longueur hors tout du vélo. On dispose ainsi d'un volume libre (V sur la figure 3) entre le tube de selle 4' et la roue arrière 5'.

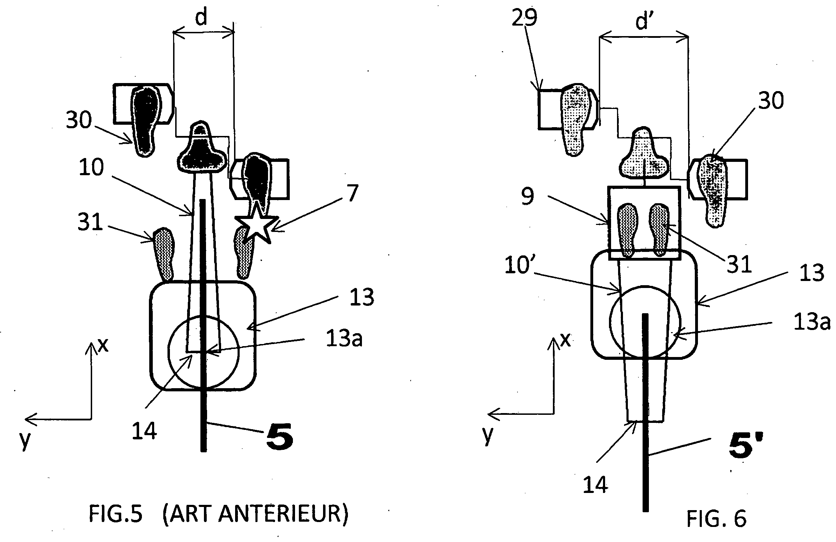

Cependant, l'installation d'un siège d'enfant dans ce volume n'est habituellement pas possible car les pieds de l'enfant se trouvent à l'intérieur de l'enveloppe ( e sur la figure 1) décrite par les pieds, plus spécifiquement les talons 30, de l'adulte lorsqu'il pédale, induisant ainsi une collision ( en 7, figure 5) entre les pieds 30 de l'adulte et les pieds 31 de l'enfant 13.

L'invention propose de résoudre ce problème en modifiant la structure portante 10 du vélo reliant l'extrémité supérieure du tube de selle 4 à l'axe de roue arrière 14, structure souvent dénommée fourche arrière ou hauban (10 et 10' sur les figures 1, 3, 5 et 6), pour faire passer les pieds de l'enfant à l'intérieur de cette structure portante.

Selon un mode de réalisation, on adapte dans ce but, derrière le tube de selle, un cadre par exemple un quadrilatère tubulaire (9 sur les figures 3 et 6) solidarisé, directement ou non, d'une part au tube de selle et d'autre part au reste de la fourche arrière ou hauban 10' du vélo reliant ainsi ce quadrilatère à l'axe 14 de roue arrière. Par comparaison, la configuration correspondant à une installation conventionnelle est présentée à la figure 5.

Le quadrilatère 9 définit ainsi un passage permettant aux pieds 31 de l'enfant 13 de se situer à l'intérieur de la structure portante ou cadre arrière du vélo.

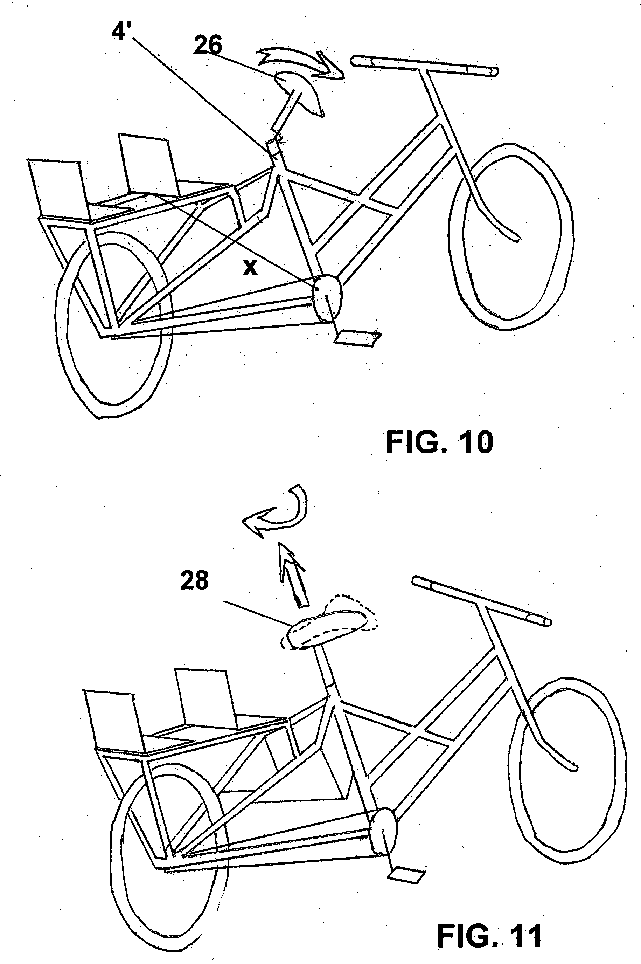

Selon un aspect de l'invention l'intersection 32 entre l'assise 24 et le dossier 25 du siège d'enfant (voir figure 3) se trouve à moins de 750mm de préférence moins de 700mm de l'axe (33) du pédalier. Cette distance (x) est illustrée par exemple à la figure 10.

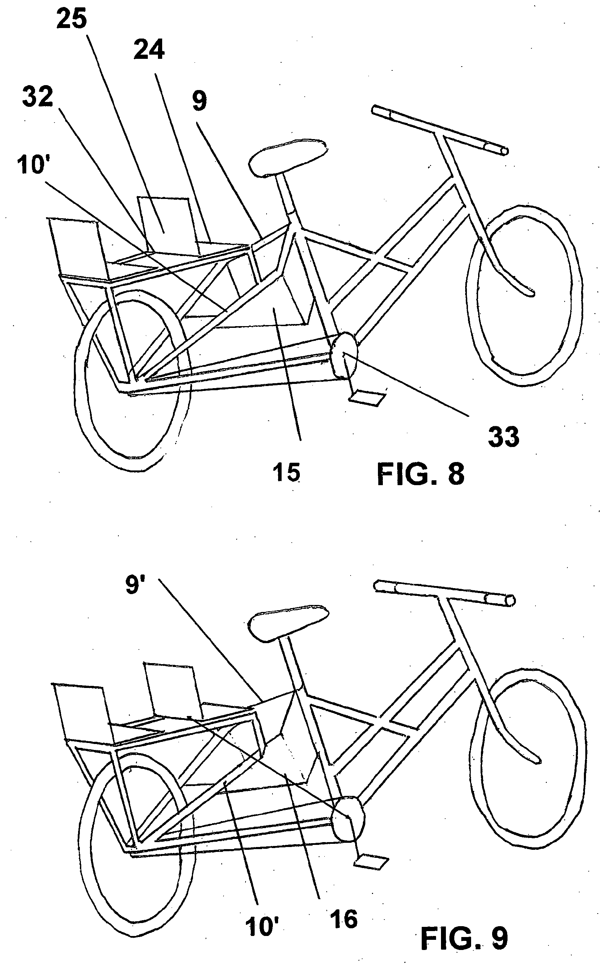

Selon un autre mode de réalisation'illustré au figures 8 et 9, on prévoit des plaques 15, 16 latérales enveloppant au moins partiellement le volume destiné à contenir les pieds de l'enfant, plaques qui peuvent être portantes pour remplacer partiellement ou totalement une partie de la structure tubulaire.

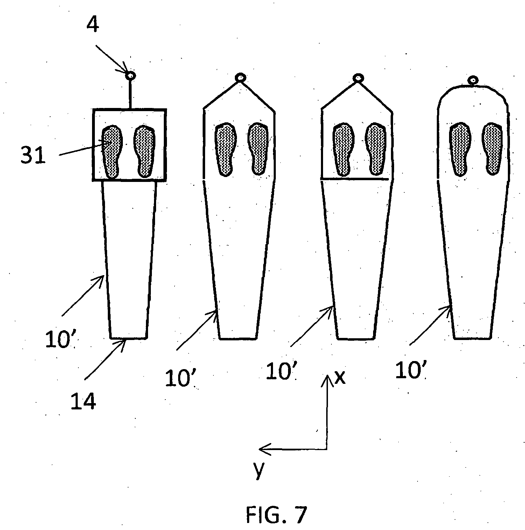

La figure 7 présente, vu d'en haut, quelques formes possibles de haubans arrière 10', soit de gauche à droite une structure en forme de quadrilatère, en tube droit sans renfort, en tube droit avec renfort transversal, en tube cintré sans renfort. La position des pieds 31 de l'enfant et l'axe de roue 14 sont illustrés.

De plus, afin d'augmenter la largeur disponible pour les pieds 31 de l'enfant, on peut avantageusement élargir la distance entre les pédales 29 (d dans la figure 5 de l'art antérieur, devient d' dans la figure 6) par exemple à plus de 225mm (d'), contre environ 200mm (d)
traditionnellement. On évite ainsi une collision, en 7 de la figure 5, entre les pieds de l'enfant et les pieds de l'adulte pédalant.

L'invention permet donc de recentrer le siège d'enfant à l'intérieur de l'empattement, et offre aussi la particularité de le faire sans augmenter de manière significative la longueur hors tout du vélo. En effet, le vélo peut être doté d'une roue 5' de 22 pouces ou moins à l'arrière et aussi à l'avant.

Le gain en longueur entre un vélo équipé de deux roues de 700mm de diamètre et un vélo équipé d'une roue de 22 pouces à l'avant et 20 à l'arrière représente : 700 * 2 /2 - (20+22) *25.4/2 = 166mm. La longueur hors tout du vélo augmente donc moins que l'allongement de l'empattement.

Un exemple de vélo avec structure tubulaire est présenté en perspective à la figure 8. On y voit l'ouverture entre les haubans arrières 10' qui permet de faire passer les pieds 31 de l'enfant se trouvant le plus à l'avant. On y voit également le confinement des pieds grâce à un panneau protecteur en matière plastique 15 évitant aux pieds de l'enfant de s'écarter et de toucher ceux de l'adulte.

Un exemple de vélo où la zone de confinement 16 fait partie intégrante du cadre portant est présenté à la figure 9. Cette partie du cadre est par exemple réalisée en tôle structurelle, sur laquelle viennent se reprendre les haubans arrières 10'.

La figure 10 montre une selle 26 qui est fixée sur un tube de selle dont une extrémité peut se plier vers l'avant afin de faciliter l'installation et le dégagement de l'enfant situé sur le siège avant.

La figure 11 montre une selle 28 qui peut pivoter de 180° autour de l'axe du tube de selle 4 lorsqu'on la soulève et qu'on la dégage de son mécanisme de verrouillage. Une fois que la selle a été remise, sa pointe dans le sens de la marche, elle redescend et se verrouille par exemple sous le poids de l'adulte grâce à un coin (cône).

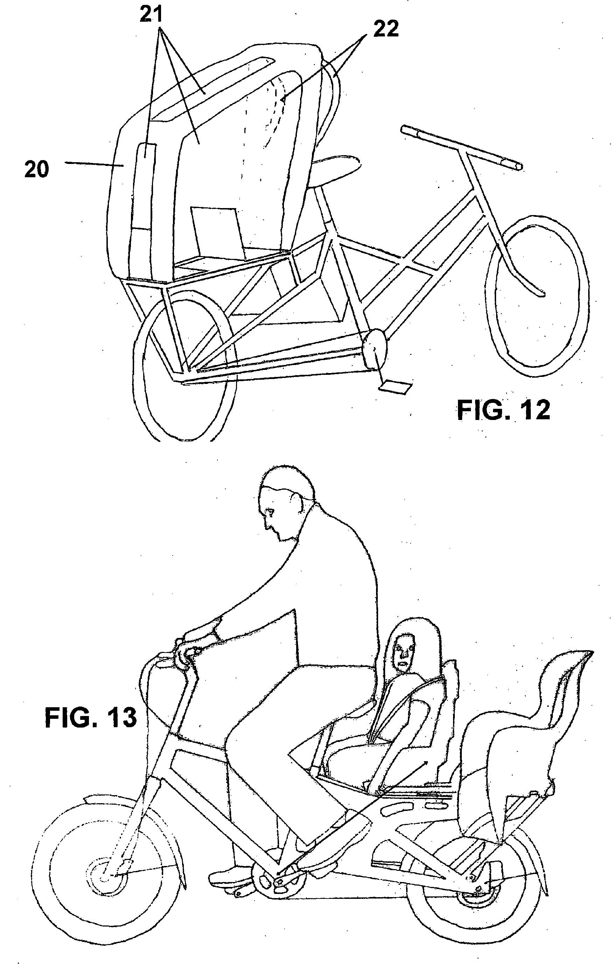

La figure 12 illustre un mode de réalisation où on prévoit une capote qui abrite le(s) enfant(s), réalisée en matière plastique souple et transparente 21, renforcée par une structure réalisée en tubes souples gonflabes 20, ou à l'aide de baguettes. L'adulte assis sur la selle peut accrocher la capote sur son dos à la manière d'un sac à dos grâce à des sangles 22 pour la maintenir dans sa partie avant. La capote est avantageusement équipée de surfaces réfléchissantes sur les côtés et à l'arrière.

En résumé l'invention concerne un vélo muni d'un siège pour enfant dans lequel le siège est positionné derrière l'adulte, dirigé vers l'avant, et dans lequel l'emplacement pour les pieds de l'enfant se trouve à l'intérieur de la partie de la structure portante du vélo reliant le tube de selle à l'axe de roue arrière, partie formant ainsi un hauban modifié.

Le siège du vélo est localisé, de telle sorte qu'en utilisation, les pieds de l'enfant se trouvent à l'intérieur de l'enveloppe (e', figure 3) décrite par le mouvement des talons de l'adulte lors du pédalage, vu de côté.

Les talons de l'adulte durant le pédalage passent, au moins partiellement, à l'extérieur des pieds de l'enfant et de la structure du hauban modifié 9 et 10' grâce à un écartement (d') des pédales 29 supérieur à celui d'un vélo standard par exemple environ 200mm et de préférence supérieur à 225mm.

Selon un autre aspect de l'invention l'intersection 32, entre l'assise 24 et le dossier 25 du siège d'enfant se trouve à moins de 750mm de préférence moins de 700mm de l'axe 33 du pédalier.

Selon un autre aspect de l'invention l'assise 24 du siège d'enfant est à moins de 700mm, de préférence moins de 675mm du sol.

Le vélo peut être équipé d'un second siège d'enfant. La longueur peut ne pas dépasser 2000mm, de préférence 1900mm.

Le diamètre de la roue arrière est de préférence inférieur au diamètre de la roue avant.

Selon un mode de réalisation, la roue avant est d'un diamètre compris entre 450 et 750 mm , de préférence 500 à 700 mm, et/ou la roue arrière est comprise entre 390 et 520 mm.

Le vélo peut comporter un cadre tubulaire 9 faisant partie de la structure portante, dont le plan est perpendiculaire au plan du vélo et obliquement par rapport au sol, intégré entre le tube de selle et une structure d'hauban reliée à l'axe de la roue arrière, ledit cadre tubulaire permettant le passage des pieds d'un enfant assis dans ledit siège.

Le vélo peut comprendre un panneau ou un système de panneaux en tôle 16, intégré entre le tube de selle et une structure d'hauban 10' relié à l'axe 14 de la roue arrière, ladite sructure en tôle délimitant au moins partiellement un volume apte à recevoir les pieds de l'enfant.

## Revendications

1. Vélo muni d'un siège pour enfant dans lequel le siège est positionné derrière l'adulte, dirigé vers l'avant, **caractérisé en ce que** l'emplacement pour les pieds (31) de l'enfant se trouve à l'intérieur de la structure portante (9, 10') du vélo reliant le tube de selle (4') à l'axe de roue arrière (14), et que le siège est localisé, de telle sorte qu'en utilisation, les pieds (31) de l'enfant se trouvent à l'intérieur de l'enveloppe (e') décrite par le mouvement des talons de l'adulte, vu de côté.

2. Vélo selon la revendication 1 dans lequel ladite structure portante est associée à un panneau ou un système de panneaux (15,16), intégré entre le tube de selle (4') et une structure d'hauban (10') relié à l'axe (14) de la roue arrière, ladite structure de panneaux (15, 16) délimitant au moins partiellement un volume apte à recevoir les pieds de l'enfant.

3. Vélo selon la revendication 2 dans lequel le panneau (15) est en matière plastique.

4. Vélo selon n'importe laquelle des revendications précédentes configuré de sorte que les talons de l'adulte durant le pédalage passent, au moins partiellement, à l'extérieur des pieds de l'enfant et de la structure portante (9, 10') grâce à un écartement (d') des pédales (29) supérieur à environ 200mm et de préférence supérieur à 225mm.

5. Vélo selon n'importe laquelle des revendications précédentes dont l'intersection (32) entre l'assise (24) et le dossier (25) du siège d'enfant se trouve à moins de 750 mm, de préférence moins de 700mm de l'axe (33) du pédalier.

6. Vélo selon n'importe laquelle des revendications précédentes dont l'assise (24) du siège d'enfant est à moins de 700mm, de préférence moins de 675 mm du sol.

7. Vélo selon les revendications précédentes, équipé d'un second siège d'enfant, et dont la longueur ne dépasse pas 2000mm, de préférence 1900mm.

8. Vélo selon n'importe laquelle des revendications précédentes dans lequel le diamètre de la roue arrière est inférieur au diamètre de la roue avant.

9. Vélo selon la revendications précédente où la roue avant est d'un diamètre compris entre 450 et 750 mm , de préférence 500 à 700 mm, et/ou la roue arrière est d'un diamètre compris entre 390 et 520 mm.

10. Vélo selon n'importe laquelle des revendications précédentes comprenant un cadre tubulaire (9) faisant partie de la structure portante, dont le plan est perpendiculaire au plan du vélo et obliquement par rapport au sol, et la structure d'hauban (10') complémentaire reliée à l'axe de la roue arrière (14), ledit cadre tubulaire permettant le passage dés pieds d'un enfant assis dans ledit siège.

11. Vélo selon la revendication précédente dans lequel le cadre tubulaire (9) est un quadrilatère.

12. Vélo selon n'importe laquelle des revendications précédentes équipé d'un tube de selle (4') permettant à la selle (26) de basculer vers l'avant, sur les côtés ou pivotant (28) autour de l'axe du tube de selle afin de donner un accès vertical plus dégagé au siège de l'enfant, ou au siège le plus à l'avant si deux sièges d'enfant sont prévus.

13. Vélo selon n'importe laquelle des revendications précédentes équipé d'une capote couvrant le ou les enfants installés à l'arrière, faite de matière transparente (21), munie ou non de surfaces réfléchissantes, et rigidifiée par une structure gonflable (20) ou des baguettes, s'accrochant avec des sangles (22) à l'avant à la manière d'un sac à dos sur le dos de l'adulte assis sur sa selle.

## Patentansprüche

1. Fahrrad, das mit einem Kindersitz ausgestattet ist, bei dem der Sitz nach vorn gerichtet, hinter dem Erwachsenen positioniert ist,
**dadurch gekennzeichnet, dass** die für die Füße des Kindes (31) vorgesehene Stelle sich innerhalb der Tragestruktur (9, 10') des Fahrrades befindet, die das Sattelrohr (4') mit der Achse des hinteren Rades (14) verbindet, und **dass** der Sitz so räumlich platziert ist, dass bei der Inbetriebnahme die Füße (31) des Kindes sich innerhalb des von der Seite her gesehenen Verlauf der Hülle (e'), der durch die Bewegung der Fersen des Erwachsenen beschrieben wird, befinden.

2. Fahrrad nach dem Anspruch 1, bei dem die besagte Tragestruktur einer Platte oder einem System von Platten (15, 16) zugehörig ist, das zwischen dem Sattelrohr (4') und einer Abspannstruktur (10'), die mit der Achse (14) des hinteren Raders verbunden ist, integriert ist, wobei die besagte Plattenstruktur (15, 16) mindestens teilweise den Raum begrenzt, der die Füße des Kindes aufnehmen kann.

3. Fahrrad nach dem Anspruch 2, bei dem die Platte (15) aus Kunststoff hergestellt ist.

4. Fahrrad nach irgendeinem der vorangehenden Ansprüche, das so konfiguriert ist, dass die Fersen des Erwachsenen, während des Tretens der Pedalen, sich mindestens teilweise an den Füßen des Kindes und an der Tragestruktur (9, 10') vorbei bewegen, dank eines Abstands (d') der Pedalen (29), der größer als ca. 200 mm und vorzugsweise größer als 225 mm ist.

5. Fahrrad nach irgendeinem der vorangehenden Ansprüche, bei dem die Intersektion zwischen der Sitzfläche (24) und der Rücklehne (25) des Kindersitzes weniger als 750 mm, vorzugsweise weniger als 700 mm von der Achse (33) des Pedallagerblocks entfernt ist.

6. Fahrrad nach irgendeinem der vorangehenden Ansprüche, bei dem die Sitzfläche (24) des Kindersitzes weniger als 700 mm, vorzugsweise weniger als 675 mm von dem Boden entfernt ist.

7. Fahrrad nach irgendeinem der vorangehenden Ansprüche, das mit einem zweiten Kindersitz ausgestattet ist und dessen Länge nicht 2000 mm, vorzugsweise nicht 1900 mm überschreitet.

8. Fahrrad nach irgendeinem der vorangehenden Ansprüche, bei dem der Durchmesser des hinteren Rades kleiner als der Durchmesser des vorderen Rades ist.

9. Fahrrad nach dem vorangehenden Anspruch, bei dem das vordere Rad einen Durchmesser aufweist, der zwischen 450 und 750 mm, vorzugsweise zwischen 500 und 700 mm liegt, und / oder das hintere Rad einen Durchmesser aufweist, der zwischen 390 und 520 mm liegt.

10. Fahrrad nach irgendeinem der vorangehenden Ansprüche, umfassend einen Rohrrahmen (9), der Teil der Tragestruktur ist, dessen Ebene lotrecht zu der Ebene des Fahrrades und schräg zum Boden verläuft, und die mit der Achse des hinteren Rades (14) verbundene komplementäre Abspannstruktur (10'), wobei der besagte Rohrrahmen den Durchgang der Füße eines Kindes, das auf dem besagten Sitz sitzt, zulässt.

11. Fahrrad nach dem vorangehenden Anspruch, bei dem der Rohrrahmen (9) ein Viereck ist.

12. Fahrrad nach irgendeinem der vorangehenden Ansprüche, das mit einem Sattelrohr (4') versehen ist, das das Kippen des Sattels (26) nach vorne, seitlich, oder das Drehen (28) um die Achse des Sattelrohres (4') erlaubt, um einen freieren vertikalen Zugang zu dem Kindersitz oder zu dem vorderen Sitz, wenn zwei Kindersitze vorgesehen sind, zu gewähren.

13. Fahrrad nach irgendeinem der vorangehenden Ansprüche, das mit einem das Kind oder die Kinder, das / die sich hinten befindet / befinden, überdeckenden Verdeck versehen ist, das aus einem durchsichtigen Material (21) hergestellt ist, mit reflektieren Flächen versehen oder nicht versehen ist, mittels einer aufblasbaren Struktur (20) oder Stäben versteift ist, und das vorne, rucksackartig, auf dem Rücken des auf seinem Sattel sitzenden Erwachsenen mit Gurten (22) gehängt wird.

## Claims

1. Bicycle equipped with a seat for a child in which the seat is positioned behind the adult, directed forward, **characterized in that** the placement for the feet (31) of the child is found inside the load-bearing structure (9, 10') of the bicycle connecting the seat tube (4') to the rear wheel axle (14) and that the seat is positioned so that in use, the feet (31) of the child are found inside the envelope (e') described by the movement of the heels of the adult, seen from the side.

2. Bicycle according to any one of the preceding claims, comprising a panel or a system of panels (15,16), incorporated between the seat tube (4') and a seat stay structure (10') connected to the axle (14) of the rear wheel, said sheet structure (15,16) at least partially delimiting a space able to receive the feet of the child.

3. Bicycle according to claim 2 wherein the panel (15) is made of plastic material.

4. Bicycle according to any one of the preceding claims configured so that the heels of the adult during pedaling pass, at least partially, to the outside of the feet of the child and of the structure of the modified seat stay (9 and 10) thanks to a separation (d') of the pedals (29) that is greater than about 200 mm and preferably greater than 225 mm.

5. Bicycle according to any one of the preceding claims, whose intersection (32) between the base (24) and the back (25) of the child seat is found at less than 750 mm, preferably less than 700 mm, from the axle (33) of the crankset.

6. Bicycle according to any one of the preceding claims, of which the base (24) of the child seat is at less than 700 mm, preferably less than 675 mm, from the ground.

7. Bicycle according to the preceding claims, equipped with a second child seat and whose length does not exceed 2,000 mm, preferably 1,900 mm.

8. Bicycle according to any one of the preceding claims, wherein the diameter of the rear wheel is less than the diameter of the front wheel.

9. Bicycle according to the preceding claim, where the front wheel has a diameter of between 450 and 750 mm, preferably 500 to 700 mm, and/or the rear wheel is between 390 and 520 mm.

10. Bicycle according to any one of the preceding claims, comprising a tubular frame (9) that is part of the load-bearing structure, whose plane is perpendicular to the plane of the bicycle and slantways in relation to the ground, and a complimentary seat stay structure (10') connected to the axle of the rear wheel (14), said tubular frame allowing the feet of a child seated in said seat to pass through.

11. Bicycle according to the preceding claim, wherein the tubular frame (9) is a quadrilateral.

12. Bicycle according to any one of the preceding claims, equipped with a seat tube (4') that makes it possible for the seat (26) to pivot forward, to the sides, or that pivots (28) around the axis of the seat tube to provide a more unobstructed vertical access to the seat of the child or to the seat farthest forward if two child seats are provided.

13. Bicycle according to any one of the preceding claims, equipped with a hood covering the child or children installed in the back, made of transparent material (21), equipped or not with reflective surfaces, and made more rigid by an inflatable structure (20) or by rods, being hooked with straps (22) in the front like a backpack onto the back of the adult seated on his seat.
